(19) Europäisches Patentamt
European Patent Office
Office européen des brevets

(11) **EP 2 343 901 B1**

(12) **EUROPEAN PATENT SPECIFICATION**

(45) Date of publication and mention
of the grant of the patent:
**29.11.2017 Bulletin 2017/48**

(21) Application number: **10150329.0**

(22) Date of filing: **08.01.2010**

(51) Int Cl.:
*H04N 19/56* (2014.01)  *H04N 19/105* (2014.01)
*H04N 19/176* (2014.01)  *H04N 19/147* (2014.01)
*H04N 19/51* (2014.01)  *H04N 19/194* (2014.01)
*H04N 19/567* (2014.01)  *H04N 19/40* (2014.01)

(54) **Method and device for video encoding using predicted residuals**

Verfahren und Vorrichtung zur Videokodierung unter Verwendung eines prädizierten Restsignals

Procédé et dispositif de codage vidéo utilisant des résidus prédits

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**13.07.2011 Bulletin 2011/28**

(73) Proprietor: **BlackBerry Limited**
**Waterloo, ON N2K 0A7 (CA)**

(72) Inventors:
• **Shi, Xun**
**Toronto, Ontario M2N 7G4 (CA)**
• **Yu, Xiang**
**Waterloo, Ontario N2L 5Z5 (CA)**
• **He, Dake**
**Waterloo, Ontario N2L 5Z5 (CA)**
• **Yang, En-Hui**
**Waterloo, Ontario N2L 5Z5 (CA)**

(74) Representative: **Hanna Moore + Curley**
**Garryard House**
**25/26 Earlsfort Terrace**
**Dublin 2, D02 PX51 (IE)**

(56) References cited:
**US-A1- 2007 217 506**

• EN-HUI YANG ET AL: "Rate Distortion Optimization for H.264 Interframe Coding: A General Framework and Algorithms" IEEE TRANSACTIONS ON IMAGE PROCESSING, IEEE SERVICE CENTER, PISCATAWAY, NJ, US LNKD-DOI:10.1109/TIP.2007.896685, vol. 16, no. 7, 1 July 2007 (2007-07-01), pages 1774-1784, XP011185448 ISSN: 1057-7149
• LIGANG LU ET AL: "Adaptive frame prediction for foveation scalable video coding" PROCEEDINGS OF THE INTERNATIONAL CONFERENCE ON MULTIMEDIA AND EXPO (ICME), 22 August 2001 (2001-08-22), pages 705-708, XP010661935 ISBN: 978-0-7695-1198-6
• SULLIVAN G J ET AL: "RATE-DISTORTION OPTIMIZATION FOR VIDEO COMPRESSION" IEEE SIGNAL PROCESSING MAGAZINE, IEEE SERVICE CENTER, PISCATAWAY, NJ, US LNKD-DOI:10.1109/79.733497, vol. 15, no. 6, 1 November 1998 (1998-11-01), pages 74-90, XP011089821 ISSN: 1053-5888
• TEST MODEL EDITING COMMITTEE: "Test Model 5", CODED REPRESENTATION OF PICTURE AND AUDIO INFORMATION (ISO/IEC JTC1/SC29/WG11 AND ITU-T SG15 Q2), no. AVC-491b, N0400, 27 March 1993 (1993-03-27), XP030000486,

**Description**

**FIELD**

The present application generally relates to video encoding and, in particular, to rate-distortion cost optimization in the context of video encoding.

**BACKGROUND**

The current state-of-the-art for video encoding is the ITU-T H.264/AVC video coding standard. It defines a number of different profiles for different applications, including the Main profile, Baseline profile and others.

There are a number of standards for encoding/decoding images and videos, including H.264/AVC, that use block-based coding processes. In these processes, the image or frame is divided into blocks, typically 4x4 or 8x8 in pixels, and the blocks are spectrally transformed into coefficients, quantized, and entropy encoded. In many cases, the data being transformed is not the actual pixel data, but is residual data following a prediction operation. Predictions can be intra-frame, *i.e.* block-to-block within the frame/image, or inter-frame, *i.e.* between frames (also called motion prediction).

The motion estimation process involved in inter-frame encoding relies upon a rate-distortion expression that only accounts for some aspects of the actual distortion and coding rate. In particular, it ignores distortion due to quantization of the residual values and the coding rate attributable to the quantized transformed residual values (the quantized transform domain coefficients). However, it would be computationally impractical for an encoder to determine these quantities for every candidate motion vector under evaluation during the encoding process in order to incorporate these quantities into the rate-distortion analysis.

The patent application US 2007/217506 A1 (YANG EN-HUI [CA] ET AL), published on 20 September 2007, discloses an iterative algorithm for a hybrid video encoder that alternately optimizes motion compensation and residual coding. The rate distortion equation used for the motion estimation process includes a fixed residual reconstruction term against which the actual prediction error is matched.

It would be advantageous to provide for an encoder and methods or processes for encoding that improve rate-distortion performance.

**BRIEF SUMMARY**

The invention is defined by the features of the appended claims. In one aspect, the present application describes a method of encoding a video, the video including a plurality of frames including a target frame and an original reference frame, the original reference frame having been encoded and decoded to produce a reconstructed reference frame stored in a frame store, the target frame including an inter-coded partition. The method includes selecting a predicted motion vector for the inter-coded partition; calculating predicted residual values from the difference between the inter-coded partition and a reference block in the original reference frame, wherein the reference block is identified by the predicted motion vector; and determining an actual motion vector with reference to the reconstructed reference frame using a rate-distortion expression incorporating the predicted residual values.

In another aspect, the present application describes an encoder for encoding a video, the video including a plurality of frames including a target frame and an original reference frame, the original reference frame having been encoded and decoded to produce a reconstructed reference frame, the target frame including an inter-coded partition. The encoder includes a processor; a memory storing the original reference frame and the reconstructed reference frame; a communications system for outputting an encoded video; and an encoding application stored in memory. The application contains instructions for configuring the processor to encode the video by selecting a predicted motion vector for the inter-coded partition; calculating predicted residual values from the difference between the inter-coded partition and a reference block in the original reference frame, wherein the reference block is identified by the predicted motion vector; and determining an actual motion vector with reference to the reconstructed reference frame using a rate-distortion expression incorporating the predicted residual values.

In another aspect, the present application describes a computer-readable medium storing computer-executable instructions that, when executed, configure a processor to execute the methods described herein.

Other aspects and features of the present application will be understood by those of ordinary skill in the art from a review of the following description of examples in conjunction with the accompanying figures.

**BRIEF DESCRIPTION OF THE DRAWINGS**

Reference will now be made, by way of example, to the accompanying drawings which show example embodiments of the present application, and in which:

Figure 1 shows, in block diagram form, an encoder for encoding video;

Figure 2 shows, in block diagram form, a decoder for decoding video;

Figure 3 shows a block diagram of an example encoder employing predicted residuals in motion estimation;

Figure 4 shows, in flowchart form, an example method of encoding a video that employs predicted residuals during motion estimation; and

Figure 5 shows, in block diagram form, an example embodiment of a encoder.

Similar reference numerals may have been used in different figures to denote similar components.

## DESCRIPTION OF EXAMPLE EMBODIMENTS

In the description that follows, example embodiments are described with reference to the H.264/AVC standard. Those ordinarily skilled in the art will understand that the present application is not limited to H.264/AVC but may be applicable to other video coding/decoding standards.

In the description that follows, the terms frame and slice are used somewhat interchangeably. Those of skill in the art will appreciate that, in the case of the H.264/AVC standard, a frame may contain one or more slices. It will also be appreciated that certain encoding/decoding operations are performed on a frame-by-frame basis and some are performed on a slice-by-slice basis, depending on the particular requirements of the applicable video coding standard. In any particular embodiment, the applicable video coding standard may determine whether the operations described below are performed in connection with frames and/or slices, as the case may be. Accordingly, those ordinarily skilled in the art will understand, in light of the present disclosure, whether particular operations or processes described herein and particular references to frames, slices, or both for a given embodiment.

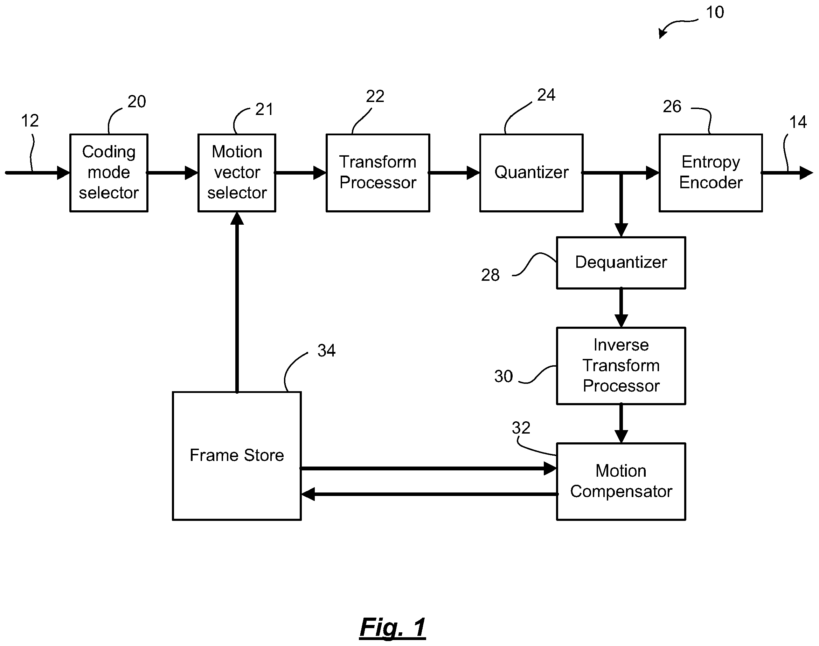

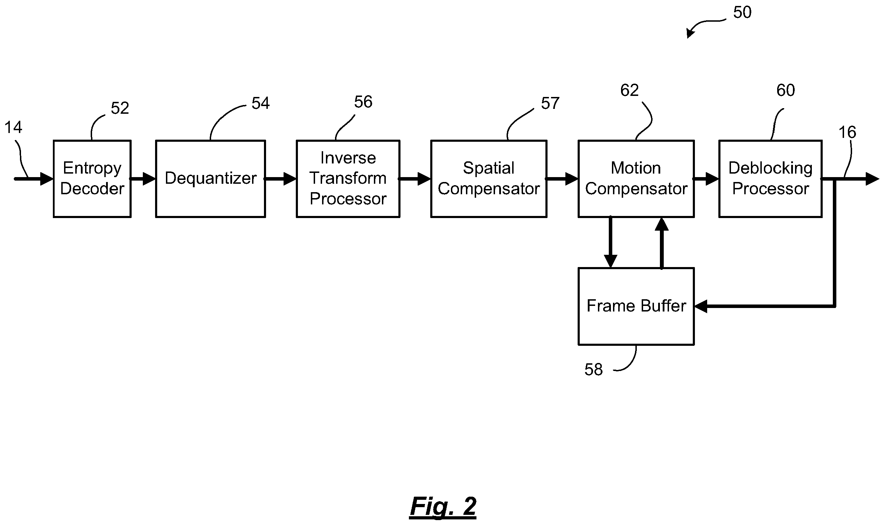

Reference is now made to Figure 1, which shows, in block diagram form, an encoder 10 for encoding video. Reference is also made to Figure 2, which shows a block diagram of a decoder 50 for decoding video. It will be appreciated that the encoder 10 and decoder 50 described herein may each be implemented on an application-specific or general purpose computing device, containing one or more processing elements and memory. The operations performed by the encoder 10 or decoder 50, as the case may be, may be implemented by way of application-specific integrated circuit, for example, or by way of stored program instructions executable by a general purpose processor. The device may include additional software, including, for example, an operating system for controlling basic device functions. The range of devices and platforms within which the encoder 10 or decoder 50 may be implemented will be appreciated by those ordinarily skilled in the art having regard to the following description.

The encoder 10 receives a video source 12 and produces an encoded bitstream 14. The decoder 50 receives the encoded bitstream 14 and outputs a decoded video frame 16. The encoder 10 and decoder 50 may be configured to operate in conformance with a number of video compression standards. For example, the encoder 10 and decoder 50 may be H.264/AVC compliant. In other embodiments, the encoder 10 and decoder 50 may conform to other video compression standards, including evolutions of the H.264/AVC standard.

The encoder 10 includes a motion vector predictor 21, a coding mode selector 20, a transform processor 22, a quantizer 24, and an entropy encoder 26. As will be appreciated by those ordinarily skilled in the art, the coding mode selector 20 determines the appropriate coding mode for the video source, for example whether the subject frame/slice is of I, P, or B type. The transform processor 22 performs a transform upon the spatial domain data. For example, in many embodiments a discrete cosine transform (DCT) is used. The transform is performed on a macroblock or sub-block basis, depending on the configuration or the rate-distortion cost. In the H.264/AVC standard, for example, a typical 16x16 macroblock contains sixteen 4x4 transform blocks and the DCT process is performed on the 4x4 blocks. In some cases, the transform blocks may be 8x8, meaning there are four transform blocks per macroblock. In yet other cases, the transform blocks may be other sizes.

The resulting transformed coefficient matrix for each block is quantized by the quantizer 24. The quantized coefficients and associated information are then encoded by the entropy encoder 26.

Intra-coded frames/slices (*i.e.* type I) are encoded without reference to other frames/slices. In other words, they do not employ temporal prediction. However intra-coded frames do rely upon spatial prediction within the frame/slice. That is, when encoding a particular block the data in the block may be compared to the data of nearby pixels within blocks already encoded for that frame/slice. Using a prediction algorithm, the source data of the block may be converted to residual data. The transform processor 22 then encodes the residual data. H.264/AVC, for example, prescribes nine spatial prediction modes for 4x4 transform blocks. In some embodiments, each of the nine modes may be used to independently process a block, and then rate-distortion optimization is used to select the best mode.

The H.264/AVC standard also prescribes the use of motion prediction/compensation to take advantage of temporal prediction, as indicated by the motion vector selector 21. Accordingly, the encoder 10 has a feedback loop that includes a de-quantizer 28, inverse transform processor 30, and motion compensator 32. These elements mirror the decoding process implemented by the decoder 50 to reproduce the frame/slice. A frame store 34 is used to store the reconstructed frames. In this manner, the motion prediction is based on what will be the reconstructed frames at the decoder 50 and not on the original frames 12, which may differ from the reconstructed frames due to the lossy compression involved in encoding/decoding. The feedback loop may include a deblocking processor in some embodiments (not illustrated).

The motion vector selector 21 uses the frames/slices stored in the frame store 34 as source frames/slices for comparison to a current frame for the purpose of identifying similar blocks. Accordingly, for macroblocks to which motion prediction is applied, the "source data" which the transform processor 22 encodes is the residual data that comes out of the motion prediction process. For example, it may include information regarding the reference frame, a spatial displacement or "motion vector", and residual pixel data that represents the differences (if any) between the reference block and the current block. Information regarding the reference frame and/or motion vector may not be processed by the transform processor 22 and/or quantizer 24, but instead may be supplied to the entropy encoder 26 for encoding as part of the bitstream associated with the quantized coefficients.

Those ordinarily skilled in the art will appreciate the details and possible variations for implementing H.264/AVC encoders.

The decoder 50 includes an entropy decoder 52, dequantizer 54, inverse transform processor 56, spatial compensator 57, and deblocking processor 60. A frame buffer 58 supplies reconstructed frames for use by a motion compensator 62 in applying motion compensation. The spatial compensator 57 represents the operation of recovering the video data for a particular intra-coded block from a previously decoded block.

The bitstream 14 is received and decoded by the entropy decoder 52 to recover the quantized coefficients. Side information may also be recovered during the entropy decoding process, some of which may be supplied to the motion compensation loop for using in motion compensation, if applicable. For example, the entropy decoder 52 may recover motion vectors and/or reference frame information for inter-coded macroblocks.

The quantized coefficients are then dequantized by the dequantizer 54 to produce the transform domain coefficients, which are then subjected to an inverse transform by the inverse transform processor 56 to recreate the "video data" (*i.e.* residual data). It will be appreciated that, in some cases, such as with an intra-coded macroblock, the recreated "video data" is the residual data for use in spatial compensation relative to a previously decoded block within the frame. The spatial compensator 57 generates the actual video data from the residual data and pixel data from a previously decoded block. In other cases, such as inter-coded macroblocks, the recreated "video data" from the inverse transform processor 56 is the residual data for use in motion compensation relative to a reference block from a different frame.

The motion compensator 62 locates a reference block within the frame buffer 58 specified for a particular inter-coded macroblock. It does so based on the reference frame information and motion vector specified for the inter-coded macroblock (or a partition within the macroblock). It then supplies the reference block pixel data for combination with the residual data to arrive at the recreated video data for that macroblock/partition.

A deblocking process may then be applied to a reconstructed frame/slice, as indicated by the deblocking processor 60. After deblocking, the frame/slice is output as the decoded video frame 16, for example for display on a display device. It will be understood that the video playback machine, such as a computer, set-top box, DVD or Blu-Ray player, and/or mobile handheld device, may buffer decoded frames in a memory prior to display on an output device.

### *R-D cost optimization in the encoding process*

A compressed inter-predicted macroblock in H.264/AVC is decoded into a set of five components ($m$, Ref, $v$, $u$ and $q$). $m$ is the macroblock mode; also interchangeably called the coding mode or the partition mode. The luminance component of a macroblock can be partitioned into one of the following 7 modes with different partition sizes: 16x16, 8x16, 16x8, 8x8 and sub-partition modes 4x8, 8x4, 4x4. Ref is a vector containing the indices of reference frames, which are previously coded frames used as predictions to each partition. For the purposes of the discussion herein, the number of reference frames is assumed to be 1. In other words, the following discussion presumes motion estimation only on one previously encoded frame; however, it will be appreciated that the more general case may involve multiple frames. $v$ are motion vectors, which are two-dimensional vectors storing the spatial offsets for each partition to its prediction in the reference frames. $u$ refers to motion prediction residuals that are to be used to adjust the data in the reference frame indicated by the motion vector in order to reconstruct the data for the partition. $q$ is the scalar quantization parameter.

In order to achieve the optimal coding performance measured by rate-distortion cost functions, a conventional encoder handles each inter-predicted macroblock with a brute-force time-consuming process. Two computationally expensive processes are employed: considering all candidate motion vectors within a certain range (motion estimation), and considering all possible macroblock modes (coding mode). Coding performance is measured by a rate-distortion cost function, which takes the form:

$$J = D + \lambda R \tag{1}$$

where distortion D refers to coding errors, and coding rate R is the number of bits spent to represent the coded macroblock. The quantity $\lambda$ is the Lagrangian multiplier, which is a function of the quantization parameter QP.

In the H.264/AVC reference codec, the cost function is carried out in motion estimation and mode decision based on somewhat different quantities. Motion estimation aims at searching for a spatial displacement (a motion vector) between current block and a location in the reference frame that leads to the minimum rate-distortion cost. This process is separately performed for each partition of a macroblock in frame *i* based on the minimization of:

$$J_{me\_min} = \min_{v_i} \left\| x_i - p_i(m_i, v_i, \overline{x_{i-1}}) \right\| + \lambda r_{v_i} \tag{2}$$

over a certain search range. Distortion, in Equation (2), is the sum of differences between original pixels $x_i$ and their predictions $p_i$. The predictions $p_i$ are found based upon the reconstructed reference frame $\overline{x_{i-1}}$, and the specific block of the reconstructed reference frame pointed at by motion vector $v_i$ and at the specified macroblock mode $m_i$. The rate term, $r_{v_i}$ represents the rate, that is the number of bits in the output bitstream required to encode the motion vectors $v_i$. It will be understood that the nomenclature "*i*-1" to indicate the reference frame does not necessarily mean that the reference frame is the frame immediately preceding the current frame *i* in the video sequence, but rather that the reference frame is a frame previously encoded by the encoder.

It will be noted that Equation (2) does not reflect the real distortion and real coding rate. In fact, the real distortion comes from the integer rounding from quantization of the transform domain coefficients (TCOEFs) (also called the "residuals"), and the real coding rate includes both motion rate and texture rate. Those skilled in the art will appreciate that the cost function used in motion estimation is incomplete because residuals are undetermined at this stage. In order for the real rate-distortion cost to be evaluated at the motion estimation stage, it would require that the encoder calculate for each candidate motion vector the residuals, transform and quantize the predicted residuals, and then reconstruct the macroblock, after which the real cost can be measured. Such an implementation is impractical due to the high computational complexity. Therefore, the conventional encoder uses Equation (2) to approximate the real rate-distortion expenses when performing motion vector estimation.

During mode decision, since the residuals are more readily available, the rate-distortion cost function is capable of taking them into account. Accordingly, macroblock mode may be selected based on the minimization of:

$$J_{md\_min} = \min_{m_i} \left\| x_i - \overline{x_i} \right\| + \lambda r_{m_i, v_i, z_i}$$
$$= \min_{m_i} \left\| x_i - (p_i(m_i, v_i, \overline{x_{i-1}}) + z^{-1} z(u_i, q_i)) \right\|$$
$$+ \lambda r_{m_i, v_i, z_i} \tag{3}$$

over all possible inter-coded macroblock modes. Equation (3) reflects the real distortion as shall be decoded in the decoder, which is the accumulated difference between original pixels $x_i$ and their reconstructions $\overline{x_t}$ over the whole macroblock. Reconstruction $\overline{x_t}$ is generated based on the macroblock prediction $p_i$ found in the reference frame as adjusted or modified by the reconstructed motion estimation residuals $z^{-1}z(u_i, q_i)$, where $u_i$ represents the residuals, $q_i$ is the quantization step size, $z$ is the transformation and quantization process, and $z^{-1}$ represents the inverse process of $z$. Rate cost in this case also represents the real coding bits, which includes not only the motion rate $r_{m,v}$ but also the texture rate $r_z$. The "texture rate" is a term sometimes used to refer to the rate for encoding the quantized transform domain coefficients (TCOEFs).

It will be appreciated that the encoding process employs the above two cost functions at different stages. Equation (2) is first used to approximate the best motion vectors for a specific macroblock mode and Equation (3) is used later in the encoding process to select the optimal macroblock mode. It is easy to infer that if Equation (2) inaccurately locates a suitable motion vector, Equation (3) will be misled in selecting an optimal macroblock mode and this sub-optimal result will eventually impact overall coding performance.

In accordance with one aspect of the present application, it is noted that if the cost function for motion estimation can be compensated with accurate residual prediction, the overall encoding performance will be consistently improved.

*__Motion estimation using original reference frames__*

The rate-distortion cost expression for selecting a motion vector represented by Equation (2) excludes distortion and rate information relating to residuals because it would be overly computationally demanding to calculate residuals, transform them, quantize them, de-quantize them, and inverse transform them for every candidate motion vector that is evaluated. Nevertheless, the present application discloses a process and encoder that employs predicted residuals in the motion vector selection process without the computational burden of determining the rate-distortion impact of actual residuals for every candidate motion vector.

In one aspect, the present application discloses a process in which the motion vector selection rate-distortion expression incorporates predicted reconstructed residual values (*i.e.* predicted residuals).

In one embodiment, the predicted residuals are obtained by selecting a predicted motion vector for a given partition and determining the predicted residuals using the predicted motion vector and the original reference frame, *i.e.* not the reconstructed reference frame in the frame store, but the original reference frame.

Consider that the determined motion vectors after regular motion estimation reflect the motion flows between the current to-be-encoded frame and the reference frame, which is the reconstruction of a previously encoded frame. In fact, these motion flows do not resemble the real motion of the video sequence, which should be determined between the current to-be-encoded frame and the original reference frame. The deviation between these two motion flows are caused by quantization operations during reconstruction of the reference frame. By using the original reference frame, propagated quantization errors are avoided.

The predicted motion vector identifies a predicted reference block within the original reference frame. The predicted residuals are determined from the difference between the predicted reference block and the to-be-encoded partition. In one sense, the predicted residuals give the encoder a set of "desired residuals" for a likely motion vector. The encoder then goes on to find an actual refined motion vector relative to the reconstructed reference frame that "best fits" the "desired residuals".

The selection of a "predicted motion vector" and the calculation of "predicted residuals" may be termed "pre-motion-estimation". Conceptually at least, the motion estimation is split into two stages. In the first stage, during pre-motion estimation, a predicted motion vector is selected and the resulting residuals from the predicted motion vector relative to the original reference frame are calculated. The selection of the predicted motion vector may use a rate-distortion expression. In the second stage, the actual motion vector is selected using rate-distortion analysis within a search area in the reconstructed reference frame, wherein the rate-distortion analysis takes into account the predicted residuals.

The rate-distortion cost function employed in pre-motion-estimation takes a similar form as for the conventional motion estimation. It will be noted that the pre-motion-estimation rate-distortion cost expression involves the original reference frame, $x_{i-1}$, as indicated below:

$$J_{pre\_mc\_min} = \min_{v_i} \|x_i - p\prime_i(m_i, v_i, x_{i-1})\| + \lambda r_v \qquad (4)$$

Residuals resulting from the predicted motion vector selected using Equation (4) relative to the original reference frame ($x_{i-1}$) are then determined. In some embodiments, they may be transformed and quantized to be used as predicted quantized transform domain coefficients in the second stage. It will be understood that the nomenclature "*i*-1" to indicate the original reference frame does not necessarily mean that the original reference frame is the frame immediately preceding the current frame *i* in the video sequence, but rather that the original reference frame is a frame previously encoded by the encoder.

The search area within the original reference frame over which Equation (4) is applied may be defined as a preset number of pixels around a pre-prediction motion vector. The pre-prediction motion vector may be selected using any one of a number of initialization processes. For example, the pre-prediction motion vector for a given partition may be based on an average (weighted or not) of other motion vectors already determined for other partitions in the frame or macroblock, *i.e.* based on spatially-related motion vectors. In some cases, it may be based on one or more motion vectors for a similar partition location in adjacent frame(s), *i.e.* based on temporally-related motion vectors. In a transcoding context, the pre-prediction motion vector may be selected using related full-resolution motion vectors. Example processes for using full-resolution motion vectors include direct use of downsampled motion vectors in a direct-mappable case, or in non-direct mappable cases the indirect use of two or more downsampled full-resolution motion vectors, such as through averaging, weighted averaging, median, etc.

Howsoever the pre-prediction motion vector is selected, once it is selected it defines a center point in the original reference frame around which a search area is defined, for example based on a preset number of pixels. Within that search area, the encoder evaluates Equation (4) to identify the predicted motion vector having the lowest rate-distortion cost according to the expression in Equation (4). The residuals resulting from the predicted motion vector are then calculated. These are then the "predicted residuals" used in selecting the actual motion vector.

To select the actual motion vector, a modification is made to Equation (2) to create a rate-distortion cost equation that takes into account the distortion and cost associated with the predicted residuals, such as the rate-distortion expression below:

$$ J'_{me\_min} = min\|x_i - (p_i(m_i, v_i, \overline{x_{i-1}}) + z^{-1}z(u'_i, q_i))\| + \lambda r_{v,z} \quad (5) $$

Equation (5) reflects motion estimation cost evaluation taking into account fixed predicted residuals ($z^{-1}z(u'_i, q_i)$). In this expression, the distortion term includes the difference between the partition to-be-encoded $x_i$ and the reference block pinpointed by the motion vector $v_i$ within the reconstructed frame $\overline{x_{i-1}}$ where the reference block is adjusted by the predicted residuals $u'_i$ after they have been transformed, quantized, de-quantized and inverse transformed. The rate term also reflects the encoding cost of not only the motion vector but also the predicted residuals (or, more accurately, the encoding cost of the quantized transformed predicted residuals z).

It will be understood from considering the present description that the residuals term ($z^{-1}z(u'_i, q_i)$) is "fixed" in the sense that it does not change during a search for a desired motion vector $v_i$ within a given search area when performing motion estimation for a particular partition. In this regard, the residuals term is a "prediction" of the residuals based on the "desired residuals" $u'_i$ from the original reference frame using the predicted motion vector, and Equation (5) may lead to the selection of a motion vector $v_i$ that results in a best fit with the predicted residuals $u'_i$. That is, each candidate motion vector $v_i$ points to a particular reference block of pixels in the reference frame. The distortion term in Equation (5) evaluates how well the original partition pixels $x_i$ match with the reconstruction that will be obtained by a decoder, where the reconstruction is the reference block as adjusted by the reconstructed predicted residuals (after they have undergone transform and quantization operations z, and the inverse operations $z^{-1}$). Accordingly, it will be appreciated that the minimum distortion will result when a motion vector $v_i$ points to a reference block that combines with the reconstructed predicted residuals (after quantization, etc.) so as to result in a best match to the original partition pixels. In other words, by using the fixed predicted residuals, the motion vector $v_i$ will be selected based on best fit with the predicted residuals.

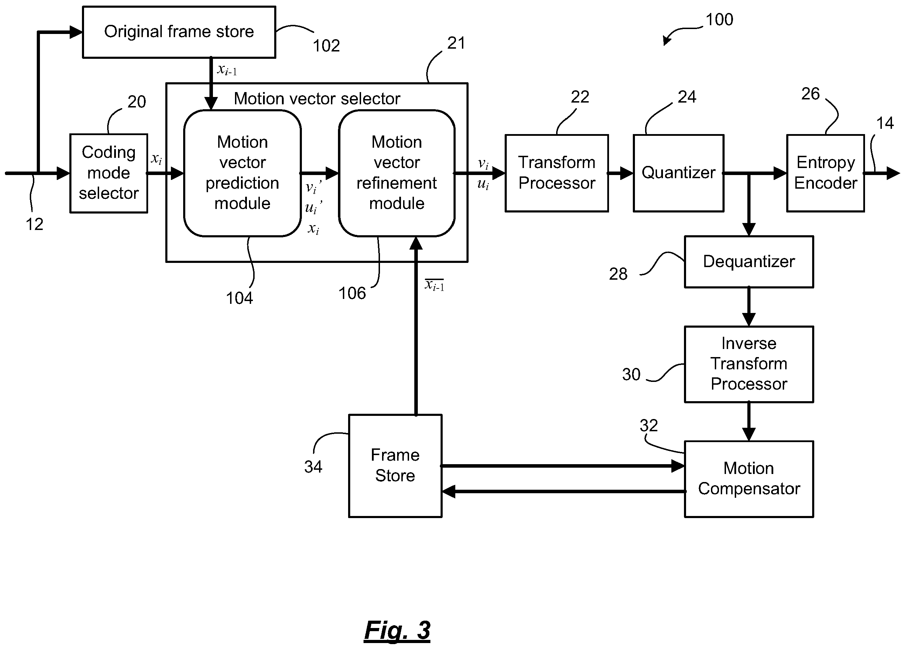

Reference is now made to Figure 3, which shows an encoder 100 in accordance with the present application. The encoder 100 includes an original frame store 102 for storing copies of original frame for use by the motion vector selector 21 in selecting predicted motion vectors and calculating predicted residuals.

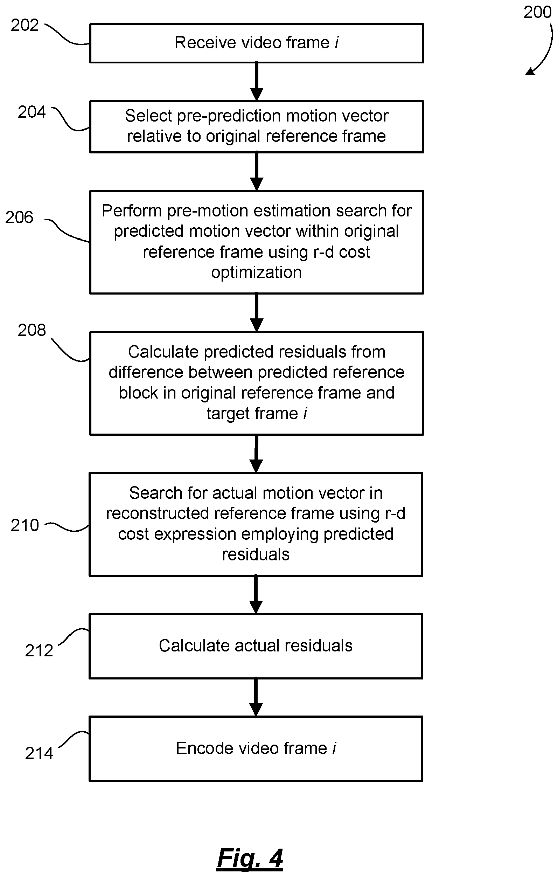

The motion vector selector 21 includes a motion vector prediction module 104 and a motion vector refinement module 106. Reference will now also be made to Figure 4, which shows, in flowchart form, an example method 200 of encoding a frame of video in accordance with the present application. The method 200 begins in step 202 with receiving the $i^{th}$ video frame. The motion vector prediction module 104 receives the current frame $x_i$, *i.e.* the frame to-be-encoded, wherein each macroblock in the frame is partitioned in accordance with a partitioning selected by the coding mode selector 20. It will be appreciated that the coding mode selector 20 may, for various coding modes, partition the macroblocks of frame $x_i$ into different partitions as it searches for an optimal coding mode. In other words, the motion vector selection, *etc.*, may loop multiple times as the coding mode selector evaluates various partitioning of the macroblocks in the frame. It will also be understood that for a given macroblock having a given partitioning, the motion vector selector 21 is tasked with selecting a motion vector for each of the partitions. Some of these details are not further elaborated upon in this simplified example.

For a given partition, the motion vector prediction module 104 selects the pre-prediction motion vector and searches for a predicted motion vector within a search area in an original reference frame $x_{i-1}$, as indicated by steps 204 and 206. The pre-prediction motion vector may be initialized using any one of a variety of techniques, examples of which are mentioned above. The motion vector prediction module 104 may use Equation (4) in step 206 to search for and select the predicted motion vector $v'_i$ from within the search area in the original reference frame $x_{i-1}$. In step 208, it then calculates the predicted residuals $u'_i$ from the difference between the partition to-be-encoded in the current frame $x_i$ and

the predicted reference block in the original reference frame $x_{i-1}$ pinpointed by the predicted motion vector $v'_i$.

The motion vector refinement module 106 receives the current frame $x_i$ (or at least the partition to-be-encoded within the current frame), the predicted motion vector $v'_i$, and the predicted residuals $u'_i$ (or, in some embodiments, transformed and quantized predicted residuals $z'_i$). It also has access to the reconstructed reference frame $\overline{x_{i-1}}$ from the frame store 34. The motion vector refinement module 106 then, in step 210, searches for the actual motion vector $v_i$ within the reconstructed reference frame $\overline{x_{i-1}}$. The search may be initiated within a search area that, in one embodiment, is centered around a point in the reconstructed reference frame $\overline{x_{i-1}}$ identified by the predicted motion vector $v'_i$. The search is based on minimization of a rate-distortion cost expression that employs the predicted residuals $u'_i$. Once the actual motion vector $v_i$ is selected, the actual residuals $u_i$ are determined in step 212. Once actual motion vectors $v$ and residuals $u$ for each partition in each macroblock in frame $i$ are selected, the frame may be encoded as shown in step 214.

Those skilled in the art will appreciate that the encoding step 214 may include transform, quantization, and entropy encoding. Moreover, those skilled in the art will appreciate that the illustrated process of selecting actual motion vectors for each partition in a macroblock may be repeated for each coding mode evaluated by the coding mode selector 20 and only the actual motion vectors and residuals corresponding to the optimal partitioning selected by the coding mode selector 20 are eventually encoded as part of the encoded video output by the encoder 100.

It will be understood that the description herein may be extended to apply to more than one original reference frame. In other words, it will be appreciated that in some embodiments the predicted residuals for a given partition may be obtained by using more than one predicted motion vector referencing more than one original reference frame.

Those skilled in the art will understand the various modifications and variations that may be made to the example process described above without departing from the general process of employing predicted residuals from an original reference frame in rate-distortion analysis used for selecting an actual motion vector.

### *Application to transcoding*

In many instances it is necessary to transcode an encoded video. For example, transcoding may be used to convert an encoded video stream from one encoding format (such as H.264) to another encoding format (such as MPEG2). In another example, transcoding may be used to reduce the frame size of a video - *i.e.* to spatially downsample the video - in order to have the video playback on a smaller video screen. This can be particularly relevant with modern technology where, for example, videos may be viewed on a mobile device screen, which tends to be relatively small, or videos may be viewed through a relatively small video playback plug-in within a web browser. In many other situations, videos that are originally encoded at a particular frame size may need to be spatially downsampled to create an encoded version of the video at a smaller frame size before being transmitted to an end user for playback. In these situations it may be too costly send the full-resolution encoded video to the end device for downsampling after decoding. Even in the absence of cost concerns, it may be too time consuming or taxing upon the processing resources of an end device to have the end device receive, decode and downsample a full-resolution video as opposed to receiving and decoding a downsampled encoded video. Hence, the importance of transcoding.

In the transcoding context, the "original reference frame" is the decoded and downsampled reference frame. This is the "original reference frame" used for pre-motion-estimation, *i.e.* to find "predicted residuals" that may then be used in Equation (5) for selecting an actual motion vector.

### *Encoder Components*

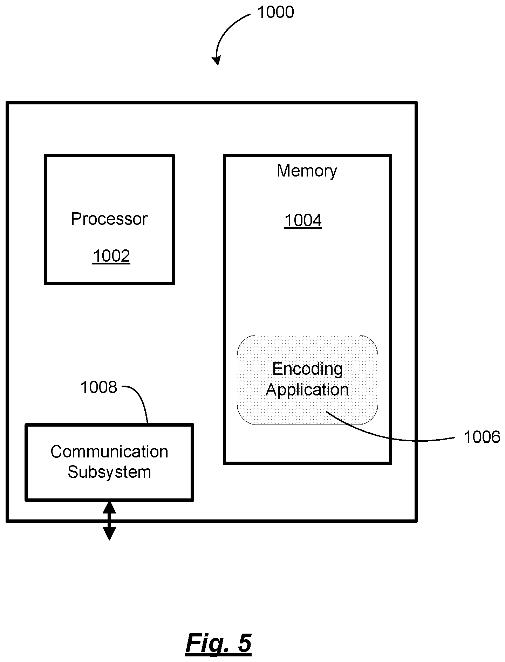

Reference is now also made to Figure 5, which shows a simplified block diagram of an example embodiment of an encoder 1000. The encoder 1000 includes a processor 1002, a memory 1004, and an encoding application 1006. The encoding application 1006 may include a computer program or application stored in memory 1004 and containing instructions for configuring the processor 1002 to perform steps or operations such as those described herein. For example, the encoding application 1006 may include subcomponents or parts for configuring the processor to encode a video and output an encoded bitstream. The encoding application 1006 may be adapted to implement some or all of the methods and processes described herein to improve the speed, efficiency, and or rate-distortion cost of the encoding.

The encoder 1000 may further include a communications subsystem 1008 for receiving "original" video and for outputting an encoded video. The communications subsystem 1008, in some embodiments, may enable communications with a network, such as the Internet.

It will be understood that the encoding application 1006 and/or its subcomponents or parts may be stored in on a computer readable medium, such as a compact disc, flash memory device, random access memory, hard drive, etc.

It will be appreciated that the encoder according to the present application may be implemented in a number of computing devices, including, without limitation, servers, suitably programmed general purpose computers, set-top television boxes, television broadcast equipment, and mobile devices. The encoder may be implemented by way of software containing instructions for configuring a processor to carry out the functions described herein. The software instructions may be stored on any suitable computer-readable memory, including CDs, RAM, ROM, Flash memory, etc.

It will be understood that the encoder described herein and the module, routine, process, thread, or other software component implementing the described method/process for configuring the encoder and/or any of its subcomponents or parts may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

**Claims**

1. A method of encoding a video (12), the video (12) including a plurality of frames including a target frame and an original reference frame ($x_{i-1}$), the original reference frame ($x_{i-1}$) having been encoded and decoded to produce a reconstructed reference frame ($\overline{x_{i-1}}$) stored in a frame store (34), the target frame including a partition ($x_i$) to be intercoded, the method comprising:

   selecting a coding mode ($m_i$);
   selecting (204, 206) a predicted motion vector ($v_i'$) for the partition ($x_i$);
   calculating (208) predicted residual values ($u_i'$) from the difference between the partition ($x_i$) and a reference block in the original reference frame ($x_{i-1}$), wherein the reference block is identified by the predicted motion vector ($v_i'$); and
   determining (210) an actual motion vector with reference to the reconstructed reference frame ($\overline{x_{i-1}}$) using a first rate-distortion expression incorporating the predicted residual values ($u_i'$) obtained from said calculating step (208); and
   encoding (214) the target frame using the determined actual motion vector;
   wherein said selecting the predicted motion vector ($v_i'$) includes selecting (206) a candidate motion vector so as to minimize a second rate-distortion expression with respect to the original reference frame ($x_{i-1}$) within a first search area, wherein the second rate-distortion expression is:

$$J_{pre\_me\_min} = \min_{v_i} \|x_i - p\prime_i(m_i, v_i, x_{i-1})\| + \lambda r_v$$

   and wherein $v_i$ is the candidate motion vector, $x_i$ is the partition included in the target frame, $x_{i-1}$ is the original reference frame, $m_i$ is the coding mode, $r_v$ is the coding rate for the motion vector $v_i$, $\lambda$ is the Lagrangian multiplier, and $p'_i$ is the reference block in the original reference frame $x_{i-1}$ identified by the motion vector $v_i$.

2. The method claimed in claim 1, wherein the first search area is centered at a first point in the original reference frame ($x_{i-1}$) identified by a pre-prediction motion vector, and wherein the method includes initializing (204) the pre-prediction motion vector.

3. The method claimed in claim 2, wherein the pre-prediction motion vector is initialized based on at least one motion vector in an adjacent partition in the target frame.

4. The method claimed in claim 2, wherein the target frame comprises a downsampled video frame, and wherein the original reference frame ($x_{i-1}$) comprises a downsampled reference frame, and wherein the pre-prediction motion vector is initialized based on at least one downsampled full-resolution motion vector.

5. The method claimed in any one of claims 1 to 4, wherein said determining (210) an actual motion vector includes selecting the actual motion vector so as to minimize the first rate-distortion expression with respect to the reconstructed reference frame ($\overline{x_{i-1}}$) within a second search area.

**6.** The method claimed in any one of claims 1 to 5, wherein said determining (210) an actual motion vector includes determining reconstructed predicted residual values ($z^{-1}z(u'_i, q_i)$) by transforming and quantizing the predicted residual values to create quantized transform domain coefficients, and dequantizing and inverse transforming the quantized transform domain coefficients to create the reconstructed predicted residual values.

**7.** The method claimed in claim 6 ,
wherein the first rate-distortion expression comprises:

$$J'_{me\_min} = min\|x_i - (p_i(m_i, v_i, \overline{x_{i-1}}) + z^{-1}z(u'_i, q_i))\| + \lambda r_{v,z}$$

and wherein $v_i$ is a candidate motion vector for the actual motion vector, $x_i$ is the partition included in the target frame, $\overline{x_{i-1}}$ is the reconstructed reference frame, $m_i$ is the coding mode, $r_{v,z}$ is the coding rate for the motion vector $v_i$ and the quantized transform domain coefficients, $\lambda$ is the Lagrangian multiplier, and $p_i$ is the reference block in the reconstructed reference frame $\overline{x_{i-1}}$ identified by the motion vector $v_i$, and wherein $u'_i$ are the predicted residual values, $q_i$ is the quantization step size, $z$ represents the transform and quantization operations, and $z^{-1}$ represents the inverse operations, and wherein the reconstructed predicted residual values are $z^{-1}z(u'_i, q_i)$.

**8.** The method claimed in any one of claims 1 to 7 further comprising calculating (212) actual residual values based on an actual reference block in the reconstructed reference frame, wherein the actual reference block is identified by the actual motion vector.

**9.** The method claimed in claim 8, further comprising comparing a rate-distortion cost of the actual residual values with a rate-distortion cost of the predicted residual values, and encoding the target frame using the residual values having the smallest rate-distortion cost of the two.

**10.** The method claimed in any one of claims 1 to 9, further comprising:

receiving (202) the target frame,
selecting a coding mode,
repeating the operations of selecting (204, 206) a predicted motion vector, calculating (208) predicted residual values, and determining (210) the actual motion vector, for each partition to be inter-coded in the target frame, and encoding (214) the target frame based on the selected coding mode and based on the determined actual motion vectors.

**11.** An encoder for encoding a video (12), the video (12) including a plurality of frames including a target frame and an original reference frame ($x_{i-1}$), the original reference frame ($x_{i-1}$) having been encoded and decoded to produce a reconstructed reference frame ($\overline{x_{i-1}}$), the target frame including a partition ($x_i$) to be inter-coded, the encoder comprising:

a processor (1002);
a memory (1004, 34, 102) storing the original reference frame ($x_{i-1}$) and the reconstructed reference frame ($\overline{x_{i-1}}$);
a communications system (1008) for outputting an encoded video (14); and
an encoding application (1006) stored in memory (1004) and containing instructions for configuring and instructing the processor (1002) to encode the video (12) using the method claimed in any one of claims 1 to 10, said instructions instructing said processor to carry out each and every step of said method.

**12.** A computer-readable medium (1004) having stored thereon computer-executable instructions (1006) which, when executed by a processor (1002), configure the processor (1002) to execute the method claimed in any one of claims 1 to 10, said instructions instructing said processor to carry out each and every step of said methods.

**Patentansprüche**

**1.** Verfahren zum Kodieren eines Videos (12), wobei das Video (12) eine Vielzahl von Rahmen umfasst, die einen Zielrahmen und einen ursprünglichen Referenzrahmen ($x_{i-1}$) beinhalten, wobei der ursprüngliche Referenzrahmen

($x_{i-1}$) kodiert und dekodiert wurde,
um einen wiederhergestellten Referenzrahmen ($\overline{x_{i-1}}$) zu erzeugen, der in einem Rahmenspeicher (34) gespeichert ist, wobei der Zielrahmen eine Partition ($x_i$) umfasst, die intercodiert werden soll, das Verfahren umfassend:

Auswählen eines Kodiermodus ($m_i$); Auswählen (204, 206) eines vorhergesagten Bewegungsvektors ($v_i'$) für die Partition ($x_i$);
Berechnen (208) von vorhergesagten Restwerten ($u_i'$) aus der Differenz zwischen der Partition ($x_i$) und einem Referenzblock in dem ursprünglichen Referenzrahmen ($x_{i-1}$), wobei der Referenzblock durch den vorhergesagten Bewegungsvektor ($v_i'$) identifiziert wird; und
Bestimmen (210) eines tatsächlichen Bewegungsvektors mit Bezug auf den wiederhergestellten Referenzrahmen ($\overline{x_{i-1}}$) mithilfe eines ersten Rate-Distorsion-Ausdrucks, der die vorhergesagten Restwerte ($u_i'$) einschließt, die durch besagten Berechnungsschritt (208) erhalten werden; und
Kodieren (214) des Zielrahmens mithilfe des bestimmten tatsächlichen Bewegungsvektors;
wobei besagtes Auswählen des vorhergesagten Bewegungsvektors ($v_i'$) das Auswählen (206) eines Bewegungsvektorkandidaten umfasst, um einen zweiten Rate-Distorsion-Ausdruck mit Bezug zu dem ursprünglichen Referenzrahmen ($x_{i-1}$) innerhalb eines ersten Suchbereichs zu minimieren, wobei der zweite Rate-Distorsion-Ausdruck ist:

$$J_{pre\_me\_min} = \min_{v_i} \|x_i - p{\prime}_i(m_i, v_i, x_{i-1})\| + \lambda r_v$$

und wobei $v_i$ der Bewegungsvektorkandidat ist, $x_i$ die Partition ist, die in dem Zielrahmen umfasst ist, $x_{i-1}$ der ursprüngliche Referenzrahmen ist, $m_i$ der Kodiermodus ist, $r_v$ die Kodierrate für den Bewegungsvektor $v_i$ ist, $\lambda$ der Lagrange-Multiplikator ist, und $p{\prime}_i$ der Referenzblock in dem ursprünglichen Referenzrahmen $x_{i-1}$ ist, der durch den Bewegungsvektor $v_i$ identifiziert wird.

2. Verfahren gemäß Anspruch 1, wobei der erste Suchbereich an einem ersten Punkt in dem ursprünglichen Referenzrahmen ($x_{i-1}$) zentriert ist, identifiziert durch einen Vor-Vorhersage Bewegungsvektor, und wobei das Verfahren das Initialisieren (204) des Vor-Vorhersage Bewegungsvektors umfasst.

3. Verfahren nach Anspruch 2, wobei der Vor-Vorhersage Bewegungsvektor basierend auf zumindest einem Bewegungsvektor in einer benachbarten Partition in dem Zielrahmen initialisiert wird.

4. Verfahren nach Anspruch 2, wobei der Zielrahmen einen down-gesampleten Videorahmen aufweist, und wobei der ursprüngliche Referenzrahmen ($x_{i-1}$) einen down-gesampleten Referenzrahmen aufweist, und wobei der Vor-Vorhersage-Bewegungsvektor basierend auf zumindest einem down-gesampleten Bewegungsvektor mit voller Auflösung initialisiert wird.

5. Verfahren nach einem der Ansprüche 1 bis 4, wobei besagtes Bestimmen (210) eines tatsächlichen Bewegungsvektors umfasst:

Auswählen des tatsächlichen Bewegungsvektors, um den ersten Rate-Distorsion-Ausdruck im Bezug auf den wiederhergestellten Referenzrahmen ($\overline{x_{i-1}}$) innerhalb eines zweiten Suchbereichs zu minimieren.

6. Verfahren nach einem der Ansprüche 1 bis 5, wobei besagtes Bestimmen (210) eines tatsächlichen Bewegungsvektors das Bestimmen wiederhergestellter vorhergesagter Restwerte ($z^{-1}z(u'_i, q_i)$) durch Transformieren und Quantisieren der vorhergesagten Restwerte umfasst, um quantisierte Transformationsdomänenkoeffizienten zu erzeugen, und Dequantisieren und inverses Transformieren der quantisierten Transformationsdomänenkoeffizienten, um die wiederhergestellten vorhergesagten Restwerte zu erzeugen.

7. Verfahren nach Anspruch 6, wobei der erste Rate-Distorsion-Ausdruck aufweist:

$$J'_{me\_min} = min\|x_i - (p_i(m_i, v_i, \overline{x_{i-1}}) + z^{-1}z(u'_i, q_i))\| + \lambda r_{v,z}$$

und wobei $v_i$ ein Bewegungsvektorkandidat für den tatsächlichen Bewegungsvektor ist, $x_i$ die Partition ist, die in dem Zielrahmen enthalten ist, $(\overline{x_{i\text{-}1}})$ der wiederhergestellte Referenzrahmen ist, $m_i$ der Kodiermodus ist, $r_{v,z}$ die Kodierrate für den Bewegungsvektor $v_i$ und die quantisierten Transformationsdomänenkoeffizienten ist, $\lambda$ der Lagrange-Multiplikator ist, und $p_i$ der Referenzblock in dem wiederhergestellten Referenzrahmen ist $(\overline{x_{i\text{-}1}})$, der durch den Bewegungsvektor $v_i$ identifiziert wird, und wobei $u'_i$ die vorhergesagten Restwerte sind, $q_i$ die Quantisierungsschrittgröße ist, $z$ die Transformations- und Quantisierungsoperationen repräsentiert, und $z^{\text{-}1}$ die Inversoperationen repräsentiert, und wobei die wiederhergestellten vorhergesagten Restwerte ($z^{\text{-}1}z(u'_i, q_i)$) sind.

8. Verfahren nach einem der Ansprüche 1 bis 7, ferner aufweisend das Berechnen (212) tatsächlicher Restwerte basierend auf einem tatsächlichen Referenzblock in dem wiederhergestellten Referenzrahmen, wobei der tatsächliche Referenzblock durch den tatsächlichen Bewegungsvektor identifiziert wird.

9. Verfahren nach Anspruch 8, ferner aufweisend das Vergleichen von Rate-Distorsion-Kosten der tatsächlichen Restwerte mit Rate-Distorsion-Kosten der vorhergesagten Restwerte, und Kodieren des Zielrahmens mithilfe der Restwerte, die von den beiden die kleinsten Rate-Distorsion-Kosten haben.

10. Verfahren nach einem der Ansprüche 1 bis 9, ferner aufweisend:

   Empfangen (202) des Zielrahmens,
   Auswählen eines Kodiermodus,
   Wiederholen der Vorgänge des Auswählens (204, 206) eines vorhergesagten Bewegungsvektors,
   Berechnens (208) vorhergesagter Restwerte, und Bestimmens (210) des tatsächlichen Bewegungsvektor für jede Partition, die in dem Zielrahmen zu interkodieren ist, und
   Kodieren (214) des Zielrahmens basierend auf dem ausgewählten Kodiermodus und basierend auf den bestimmten tatsächlichen Bewegungsvektoren.

11. Kodierer zum Kodieren eines Videos (12), wobei das Video (12) eine Vielzahl von Rahmen umfasst, die einen Zielrahmen und einen ursprünglichen Referenzrahmen ($x_{i\text{-}1}$) umfassen, wobei der ursprüngliche Referenzrahmen ($x_{i\text{-}1}$) kodiert und dekodiert wurde, um einen wiederhergestellten Referenzrahmen ($\overline{x_{i\text{-}1}}$) zu erzeugen, wobei der Zielrahmen eine Partition ($x_i$) umfasst, die intercodiert werden soll, wobei der Kodierer aufweist:

   einen Prozessor (1002);
   einen Speicher (1004, 34, 102), der den ursprünglichen Referenzrahmen ($x_{i\text{-}1}$) und den wiederhergestellten Referenzrahmen ($x_{i\text{-}1}$) speichert;
   ein Kommunikationssystem (1008) zum Ausgeben eines kodierten Videos (14); und eine Kodierungsanwendung (1006), die in dem Speicher (1004) gespeichert ist und Anweisungen zum Einstellen und Anweisen des Prozessors (1002) zum Kodieren des Videos (12) unter Verwendung des Verfahrens nach einem der Ansprüche 1 bis 10 enthält, wobei besagte Anweisungen besagten Prozessor anweisen, jeden Schritt des besagten Verfahrens auszuführen.

12. Computerlesbares Medium (1004) mit darauf gespeicherten computerlesbaren Anweisungen (1006), die, bei Ausführung durch einen Prozessor (1002), den Prozessor (1002) dazu einrichten, das Verfahren nach einem der Ansprüche 1 bis 10 auszuführen, wobei besagte Anweisungen besagten Prozessor anweisen, jeden Schritt des besagten Verfahrens auszuführen.

**Revendications**

1. Procédé d'encodage d'une vidéo (12), la vidéo (12) comprenant une pluralité de trames comprenant une trame cible et une trame de référence d'origine ($x_{i\text{-}1}$), la trame de référence d'origine ($x_{i\text{-}1}$) ayant été encodée et décodée pour produire une trame de référence reconstruite $(\overline{x_{i\text{-}1}})$ mémorisée dans une mémoire de trame (34), la trame cible comprenant une partition ($x_i$) à inter-coder, le procédé comprenant :

   la sélection d'un mode de codage ($m_i$) ;
   la sélection (204, 206) d'un vecteur de mouvement prédit ($v_i'$) pour la partition ($x_i$) ;
   le calcul (208) de valeurs résiduelles prédites ($u_i'$) à partir de la différence entre la partition ($x_i$) et un bloc de référence dans la trame de référence d'origine ($x_{i-1}$), où le bloc de référence est identifié par le vecteur de mouvement prédit ($v_i$') ; et

la détermination (210) d'un vecteur de mouvement réel avec référence à la trame de référence reconstruite ($\overline{x_{i-1}}$) en utilisant une première expression taux-distorsion incorporant les valeurs résiduelles prédites ($u_i$') obtenues à ladite étape de calcul (208) ; et

l'encodage (214) de la trame cible en utilisant le vecteur de mouvement réel déterminé ;

dans lequel ladite sélection du vecteur de mouvement prédit ($v_i$') comprend la sélection (206) d'un vecteur de mouvement candidat de manière à réduire à un minimum une deuxième expression taux-distorsion en relation avec la trame de référence d'origine ($x_{i-1}$) dans une première zone de recherche, dans lequel la deuxième expression taux-distorsion est :

$$J_{pre\_me\_min} = \min_{v_i} \|x_i - p\prime_i(m_i, v_i, x_{i-1})\| + \lambda r_v$$

et dans lequel $v_i$ est le vecteur de mouvement candidat, $x_i$ est la partition incluse dans la trame cible, $x_{i-1}$ est la trame de référence d'origine, $m_i$ est le mode de codage, $r_v$ est le taux de codage pour le vecteur de mouvement $v_i$, $\lambda$ est le multiplicateur lagrangien, et $p'_i$ est le bloc de référence dans la trame de référence d'origine $x_{i-1}$ identifié par le vecteur de mouvement $v_i$.

2. Procédé selon la revendication 1, dans lequel la première zone de recherche est centrée au niveau d'un premier point dans la trame de référence d'origine ($x_{i-1}$) identifié par un vecteur de mouvement de pré-prédiction, et le procédé comprenant l'initialisation (204) du vecteur de mouvement de pré-prédiction.

3. Procédé selon la revendication 2, dans lequel le vecteur de mouvement de pré-prédiction est initialisé sur la base d'au moins un vecteur de mouvement dans une partition adjacente dans la trame cible.

4. Procédé selon la revendication 2, dans lequel la trame cible comprend une trame vidéo sous-échantillonnée, et dans lequel la trame de référence d'origine ($x_{i-1}$) comprend une trame de référence sous-échantillonnée, et dans lequel le vecteur de mouvement de pré-prédiction est initialisé sur la base d'au moins un vecteur de mouvement de résolution totale sous-échantillonné.

5. Procédé selon l'une quelconque des revendications 1 à 4, dans lequel ladite détermination (210) d'un vecteur de mouvement réel comprend la sélection du vecteur de mouvement réel de manière à réduire à un minimum la première expression taux-distorsion en relation avec la trame de référence reconstruite ($\overline{x_{i-1}}$) dans une deuxième zone de recherche.

6. Procédé selon l'une quelconque des revendications 1 à 5, dans lequel ladite détermination (210) d'un vecteur de mouvement réel comprend la détermination de valeurs résiduelles prédites reconstruites ($z^{-1}z(u'_i, q_i)$) en transformant et quantifiant les valeurs résiduelles prédites pour créer des coefficients de domaine de transformation quantifiés, et en déquantifiant et transformant en inverse les coefficients de domaine de transformation quantifiés pour créer les valeurs résiduelles prédites reconstruites.

7. Procédé selon la revendication 6, dans lequel la première expression taux-distorsion comprend :

$$J'_{me\_min} = min\|x_i - (p_i(m_i, v_i, \overline{x_{i-1}}) + z^{-1}z(u'_i, q_i))\| + \lambda r_{v,z}$$

et dans lequel $v_i$ est un vecteur de mouvement candidat pour le vecteur de mouvement réel, $x_i$ est la partition incluse dans la trame cible, $\overline{x_{i-1}}$ est la trame de référence reconstruite, $m_i$ est le mode de codage, $r_{v,z}$ est le taux de codage pour le vecteur de mouvement $v_i$ et les coefficients de domaine de transformation quantifiés, $\lambda$ est le multiplicateur lagrangien, et $p_i$ est le bloc de référence dans la trame de référence reconstruite $\overline{x_{i-1}}$ identifié par le vecteur de mouvement $v_i$, et dans lequel $u'_i$ sont les valeurs résiduelles prédites, $q_i$ est la taille de pas de quantification, $z$ représente les opérations de transformation et de quantification, et $z^{-1}$ représente les opérations inverses, et dans lequel les valeurs résiduelles prédites reconstruites sont $z^{-1}z(u'_i, q_i)$.

8. Procédé selon l'une quelconque des revendications 1 à 7, comprenant en outre le calcul (212) de valeurs résiduelles réelles sur la base d'un bloc de référence réel dans la trame de référence reconstruite, dans lequel le bloc de référence réel est identifié par le vecteur de mouvement réel.

9. Procédé selon la revendication 8, comprenant en outre la comparaison d'un coût taux-distorsion des valeurs résiduelles réelles avec un coût taux-distorsion des valeurs résiduelles prédites, et l'encodage de la trame cible en utilisant les valeurs résiduelles ayant le coût taux-distorsion le plus faible des deux.

10. Procédé selon l'une quelconque des revendications 1 à 9, comprenant en outre :

la réception (202) de la trame cible,
la sélection d'un mode de codage,
la répétition des opérations de sélection (204, 206) d'un vecteur de mouvement prédit, de calcul (208) de valeurs résiduelles prédites, et de détermination (210) du vecteur de mouvement réel pour chaque partition à inter-coder dans la trame cible, et
l'encodage (214) de la trame cible sur la base du mode de codage sélectionné et sur la base des vecteurs de mouvement réels déterminés.

11. Encodeur pour encoder une vidéo (12), la vidéo (12) comprenant une pluralité de trames comprenant une trame cible et une trame de référence d'origine ($x_{i-1}$), la trame de référence d'origine ($x_{i-1}$) ayant été encodée et décodée pour produire une trame de référence reconstruite $(\overline{x_{i-1}})$, la trame cible comprenant une partition ($x_i$) à inter-coder, l'encodeur comprenant :

un processeur (1002) ;
une mémoire (1004, 34, 102) mémorisant la trame de référence d'origine ($x_{i-1}$) et la trame de référence reconstruite $(\overline{x_{i-1}})$ ;
un système de communication (1008) pour délivrer une vidéo encodée (14) ; et
une application d'encodage (1006) mémorisée dans une mémoire (1004) et contenant des instructions pour configurer le processeur (1002) et lui ordonner d'encoder la vidéo (12) en utilisant le procédé selon l'une quelconque des revendications 1 à 10, lesdites instructions ordonnant audit processeur d'effectuer chacune des étapes dudit procédé.

12. Support pouvant être lu par ordinateur (1004) sur lequel des instructions exécutables par ordinateur (1006) sont mémorisées qui, lorsqu'elles sont exécutées par un processeur (1002), configurent le processeur (1002) pour exécuter le procédé selon l'une quelconque des revendications 1 à 10, lesdites instructions ordonnant audit processeur d'effectuer chacune des étapes dudit procédé.

EP 2 343 901 B1

**Fig. 1**

**_Fig. 2_**

*Fig. 3*

200

202 — Receive video frame *i*

204 — Select pre-prediction motion vector relative to original reference frame

206 — Perform pre-motion estimation search for predicted motion vector within original reference frame using r-d cost optimization

208 — Calculate predicted residuals from difference between predicted reference block in original reference frame and target frame *i*

210 — Search for actual motion vector in reconstructed reference frame using r-d cost expression employing predicted residuals

212 — Calculate actual residuals

214 — Encode video frame *i*

*Fig. 4*

1000

Processor

1002

Memory

1004

Encoding
Application

1006

1008

Communication
Subsystem

**_Fig. 5_**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2007217506 A1